# EUROPEAN PATENT APPLICATION

(11) **EP 2 093 977 A1**
(43) Date of publication of application: **26.08.2009**
(21) Application number: 08300106.5
(22) Date of filing: 21.02.2008
(51) Int. Cl.: H04L 29/08

(54) **Method for allocating orchestrated services, dynamic application latency controller and service orchestration device**

(71) Applicant: Alcatel Lucent, 75008 Paris (FR)
(72) Inventor: Maas, Gerard, 2650 Edegem (BE); Theeten, Bart Antoon Rika, 9100 Sint-Niklaas (BE)
(74) Representative: Schneider, Sandra

(57) **Abstract**

The present invention relates to a method for allocating an application comprising orchestrated services to one of at least two orchestration engines (130, 140, 150), each of the orchestration engines (130, 140, 150) being adapted to execute orchestrated services respecting certain performance conditions. The method comprises the steps of receiving performance conditions (c1, c2, c3) for the application to be executed on the orchestration engine (130, 140, 150) and allocating one of the at least two orchestration engines (130, 140, 150) to the application, thereby respecting the received performance conditions (c1, c2, c3). The invention further relates to a dynamic application latency controller (200) for performing that method and a service orchestration device (210) comprising that dynamic application latency controller (200).

## Description

### BACKGROUND OF THE INVENTION

The present invention relates to a method for allocating an application comprising orchestrated services to one of at least two orchestration engines, each of the orchestration engines being adapted to execute orchestrated services respecting certain performance conditions. The invention further relates to a dynamic application latency controller for allocation of an application comprising orchestrated services to one of at least two orchestration engines, each of the orchestration engines being adapted to execute orchestrated services respecting certain performance conditions. The invention further relates to a service orchestration device.

The present invention relates to the field of service oriented architecture (SOA). A service oriented architecture (SOA) is essentially a collection of services. These services communicate with each other using standardised mechanisms. Web services are the most widely deployed example of services of a service oriented architecture. Said communication of services can involve either simple data passing or can involve some entity coordinating to one or more services into one application.

Service oriented architecture (SOA) is an architectural style that covers aspects of creating and using services and also covers aspects of defining and provisioning the IT (Information Technology) infrastructure. SOA represents a model in which functionality is decomposed into small distinct services, which can be distributed over a network and can be combined together and re-used to create applications.

Using techniques like orchestration, new re-usable services can be put faster to market while leveraging on already deployed services increases business agility and reducing risks. The technical approach of service orchestration enables the re-use of capabilities of services and reduces development efforts for new services.

A service delivery platform (SDP) typically provides a service control environment, a service creation environment, a service orchestration and execution environment, and abstractions for media control, presence/location, integration and other low level communication capabilities.

Services of a service oriented architecture run on a service delivery platform. Services of one or more service delivery platforms can be orchestrated, leading to an application comprising orchestrated services, which comprise services running on different service delivery platforms. Services residing on a single service delivery platform can be orchestrated as well, leading to an application of orchestrated services, which resides on one service delivery platform.

When orchestrating services of different service delivery platforms inter service delivery platform interactions are moved towards an external layer. This reduces dependencies and increases the flexibility of the services.

Service oriented architecture is a mean to create new services. It exposes the functionality hosted on each service delivery platform and leverages on the operator's deployed system in a uniform way. SOA opens the door for convergent services in domains like Triple Play and managed communication services. Triple Play is the converged service offer of television services, (IP-) telephony services and Internet services.

Models for service interactions may for example comprise sequences of peer-to-peer message exchanges, both synchronous and asynchronous, within stateful short-lived interactions involving one, two or more platforms.

An orchestration model fulfils some aspects of the service delivery by coordinating interactions of loosely coupled services e.g. across platforms boundaries. An orchestrated interaction is hosted on an orchestration engine. An orchestration engine is a system capable of understanding the orchestration script and executing the services interactions described in it.

The runtime characteristics of an application comprising orchestrated services is typically bound to the underlying orchestration engine that hosts the orchestration script. The orchestration engine typically offers a service on top of a communication infrastructure interconnecting the different service delivery platforms and capable of offering message routing capabilities.

Currently, the non-functional characteristics of an application comprising orchestrated services, in terms of latency, throughput and reliability is characterized by three main factors. Firstly, the capabilities offered by the communication infrastructure. Secondly, the response of the participating services, e.g. web services. Thirdly, the optimisation of the orchestration engine itself.

For an application comprising orchestrated services, non-functional characteristics are defined in a static manner. The definition of the non-functional characteristics is based on an inherent mix of the three above mentioned elements, capabilities offered by the communication infrastructure, response of the participating services, e. g. web services, and optimisation of the orchestration engine itself. When a change in the response of an orchestrated services needed, one or more of these three elements have to be adapted, in order to be able to implement a new requirement. This requires extensive efforts to achieve a change in the infrastructure of the service oriented architecture.

### OBJECT OF THE INVENTION

It is an object of the invention to provide method for allocating an application comprising orchestrated services to one of at least two orchestration engines. It is another object of the invention to provide a dynamic application latency controller and a service orchestration device comprising a dynamic application latency controller.

### SUMMARY OF THE INVENTION

These objects and others that appear below are achieved by a method for allocating an application, a dynamic application latency controller according to claim 5 and service orchestration device according to the independent claims.

According to one aspect of the invention, the invention is able to react on a change of the performance characteristics of an application comprising orchestrated services. Such a change can for example be based on changed performance conditions. One of at least two orchestration engines is then allocated to the application, respecting the performance conditions.

The performance conditions may be internal and/or external conditions. The performance conditions may be specified as a set of conditional statements called rules that may be related to automatically measurable conditions, thresholds or manual administrative actions. The conditions may also be conditions received from a user of the application. The conditions may also be service level requirement conditions. A service level requirement condition is a service level agreement (SLA) that is part of a service contract where the level of service is formerly defined. It is a contract that exists between a service provider and a customer of the service.

According to another aspect of the invention a dynamic application latency controller is able to change the latency characteristics of an application comprising orchestrated services by performing the method for allocating an application according to receive performance conditions to one of at least two orchestration engines, respecting the received performance conditions. The dynamic application latency controller comprises means to receive the performance conditions for the application to be executed on the orchestration engine and means to allocate one of the at least two administration engines of the service orchestration device to the application, respecting the received performance conditions.

The dynamic application latency controller is able to change the latency characteristics of the application based on e.g. internal and/or external conditions. Such conditions may be specified as a set of conditional statements or rules that may be related to automatically measurable conditions, thresholds or manual administrative actions.

The service orchestration device comprises a dynamic application latency controller and at least two orchestration engines, each of the orchestration engines being adopted to execute orchestrated services respecting certain performance conditions.

According to another aspect of the invention the service orchestration device comprises two or more orchestration execution engines with different non-functional characteristics. The dynamic application latency controller is adapted to evaluate a list of conditions in the system and determine when a given orchestration script should be moved between the two or more execution engines.

According to another aspect of the invention manual intervention in the system may also force the dynamic application latency controller to move a specific orchestration script to another execution engine. This might for example be done in special situations such as emergency situations.

### BRIEF DESCRIPTION OF THE DRAWINGS

Other characteristics and advantages of the invention will become apparent in the following detailed description of preferred embodiments of the invention illustrated by the accompanying drawings given by way of nonlimiting illustrations.

Figure 1 shows a schematic overview of the method for allocating an application comprising orchestrated services to one of at least two orchestration engines,

Figure 2 shows a schematic overview over a service orchestration device comprising a dynamic application latency controller.

### DETAILED DESCRIPTION OF THE INVENTION

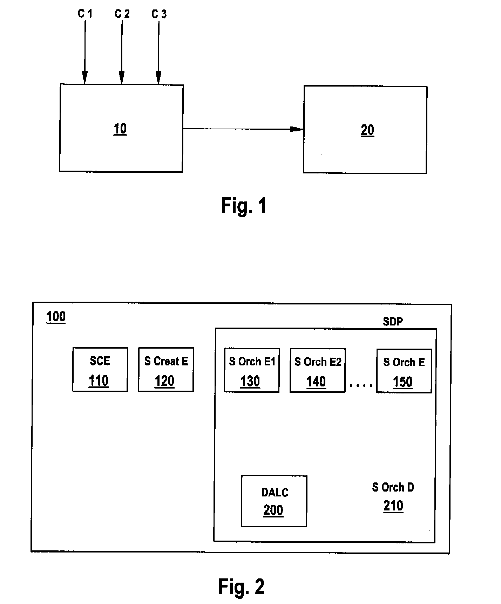

Shown in figure 1 are the steps of the method for allocating an application comprising orchestrated services to one of at least two orchestration engines 130, 140, 150, each of the orchestration engines 130, 140, 150, being adapted to execute orchestrated services respecting certain performance conditions. The method comprises the steps 10 and 20. In step 10 performance conditions c1, c2, c3, for the application comprising orchestrated services to be executed on the orchestration engine are received. An orchestration engines executes an application by executing the orchestration script of the application comprising orchestrated services. In step 20 one of the at least two orchestration engines 130, 140, 150, is allocated to the application, respecting the received performance conditions c1, c2, c3. The one of the at least two orchestration engines 130, 140, 150, that is allocated to the application will executes the orchestration script of that application.

The method shown in figure 1 is for example performed by a dynamic application latency controller 200 as shown in figure 2. The dynamic application latency controller 200 is for example part of a service orchestration device 210, also shown in figure 2.

Shown in figure 2 is a service delivery platform SDP 100. The service delivery platform 100 comprises a service control environment 110, a service creation environment 120 and a service orchestration device 210. The service orchestration device 210 comprises two or more service orchestration engines 130, 140, and 150. The service orchestration device 210 further comprises a dynamic application latency controller 200.

The dynamic application latency controller 200 works in the shown environment with three orchestration execution engines 130, 140, 150. The number of three orchestration execution engines shown in fig. 2 is just an example. The invention may be performed using two or more orchestration execution engines. One of the two or more orchestration execution engines 130, 140, 150, can for example be optimized for low latency processing, having higher CPU and memory demands and being limited in the number of simultaneous requests it can handle. Others of the two or more execution engines 130, 140, 150, are for example tuned for numerous simultaneous requests and can handle more requests at the expenses of having higher latency characteristics.

The dynamic application latency controller 200 determines on which execution engine 130, 140, 150, a given application comprising orchestrated services should be placed and when to move the application from one engine to another with different latency characteristics. The decision is based on a set of performance conditions that are checked. The performance conditions might be related to the application environment, special conditions such as service level agreement fulfilment or might include external information such as weather or user provided input.

The invention offers the possibility to deploy applications comprising orchestrated services in a dynamic way to the execution environment.

For example, the invention is useful for catastrophe assistance. Assume that the application comprising orchestrated services is considered non-critical. In the case of a catastrophe, the application might be moved from that non-critical mode to a critical low latency execution engine to enable the quickest orchestration as response to the catastrophe assistance in emergency mode.

Another example might be based on the SLA (service level agreement) fulfilment. A service provider offers for example multi partly conferencing based on the low latency execution environment. In case of a high load of the system the dynamic application latency controller 200 may decide to move the conferencing application to the high latency environ ment with more capacity, thereby reducing the reaction quality of the system but insuring the all users can be served.

The inventive dynamic application latency controller 200 is able to react to a set of performance conditions appropriate to the environment of the service provider of the service delivery platform 100. It is fully configurable to the requirements of the operator of the service delivery platform and can therefore regulate the performance of applications comprising orchestrated services taking into consideration for example business models or exceptional performance conditions.

## Claims

1. Method for allocating on application comprising orchestrated services to one of at least two orchestration engines (130, 140, 150), each of the orchestration engines (130, 140, 150) being adapted to execute orchestrated services respecting certain performance conditions, the method comprising the steps of
receiving performance conditions (C1, C2, C3) for the application to be executed on the orchestration engine (130, 140, 150), and
allocating one of the at least two orchestration engines (130, 140, 150) to the application, thereby respecting the received performance conditions (C1, C2, C3).

2. Method according to claim 1, **characterized by**
the received performance conditions (C1, C2, C3) comprising conditions received from a user of the application.

3. Method according to claim 1 or 2, **characterized by**
the received performance conditions (C1, C2, C3) comprising conditions service level requirement conditions.

4. Method according to claim 1, 2 or 3, **characterized by**
that the step of allocating one of the at least two orchestration engines (130, 140, 150) to the application is performed while the application is executed on one of the at least two orchestration engines (130, 140, 150).

5. Dynamic application latency controller (200) for allocation of an
application comprising orchestrated services to one of at least two orchestration engines (130, 140, 150), each of the orchestration engines (130, 140, 150) being adapted to execute orchestrated services respecting certain conditions, the dynamic application latency controller (200) comprising
means to receive performance conditions (C1, C2, C3) for the
application to be executed on the orchestration engine (130, 140, 150), and
means to allocate one of the at least two orchestration engines (130,
140, 150) to the application, thereby respecting the received performance conditions.

6. Service orchestration device (210) comprising the dynamic application latency controller (200) of claim 5 and at least two orchestration engines (130,140, 150), each of the orchestration engines (130, 140, 150) being adapted to execute orchestrated services respecting certain performance conditions (C1, C2, C3).
